# EUROPÄISCHE PATENTSCHRIFT

(11) **EP 1 293 485 B1**
(45) Veröffentlichungstag und Bekanntmachung des Hinweises auf die Patenterteilung: **05.04.2006**
(21) Anmeldenummer: 02100091.4
(22) Anmeldetag: 31.01.2002
(51) Int. Cl.: C02F 3/12, C02F 1/44

(54) **Verfahren zur Aufbereitung von Industrieabwässern**
Method for treating industrial waste water
Procédé de traitement des eaux résiduaires industrielles

(43) Veröffentlichungstag der Anmeldung: 19.03.2003
(73) Patentinhaber: Ford Global Technologies, LLC, Dearborn, MI 48126 (US)
(72) Erfinder: Rick, Manfred, 53797, Lohmar (DE)
(74) Vertreter: Drömer, Hans-Carsten

(56) Entgegenhaltungen:
- EP-A- 0 503 115
- EP-A- 0 503 649
- DE-A- 3 709 174
- DE-C- 19 646 414

## Beschreibung

Die Erfindung bezieht sich auf ein Verfahren zur Aufbereitung von Abwässern aus der metallverarbeitenden Industrie, vorzugsweise dazu geeignet das Abwasser derart aufzubereiten, daß es der Produktion erneut zugeführt werden kann.

In der metallverarbeitenden Industrie fallen häufig große Mengen an Abwassern an, z. B. aus der spanenden oder schleifenden Bearbeitung von Werkstücken in Form von Kühlschmiermitteln oder als Kühl- oder Spülwasser. Üblicherweise wird dieses Abwasser nach Durchlaufen einer entsprechenden Abwasserbehandlungsanlage (ABA) in die öffentliche Kanalisation abgegeben. Eine Mehrfachnutzung oder Wiederverwendung des Abwassers in der Produktion ist aus Kostengründen wünschenswert.

Die oben genannten Abwässer sind im Wesentlichen mit folgenden Schadstoffen belastet (als Grundlage dient hier die Rahmen-Abwasser VwV, Anhang 40):

**Tabelle 1: Schadstoffe im industriellen Abwasser und deren Behandlungsmöglichkeiten**

| | |
|---|---|
| **Parameter** | **Behandlungsmethode in der ABA** |
| Schwermetalle | Flockung / Fällung als Metallhydroxidschlamm, Bisulfidfällung, lonentauscher. |
| CKW, LHKW | Aktivkohle |
| Komplexbildner | Vermeidung |
| Kohlenwasserstoffe | Membranverfahren |
| CSB | Biologische Abbaustufe |

Diese Schadstoffe werden heute mit entsprechenden chemischen oder physikalischen Verfahren behandelt - wie in o.g. Tabelle gezeigt - und abgeschieden. Dabei gilt es die gesetzlich festgelegten Konzentrationen einzuhalten. Insbesondere spielt die Ausflockung und/oder Ausfällung der Schadstoffe im Behandlungsprozeß eine zentrale Rolle, da nur mit diesen Verfahren große Wassermengen behandelt werden können. Als Nebenprodukt des Fällungsprozesses wird aber das Wasser mit Calcium-, Natrium-, Chlorid- und Sulfatverbindungen aufgesalzt.

So ist aus der DE 37 09 174 ein Verfahren bekannt, welches eine Reinigung von organisch belastetem Abwasser beschreibt. Dabei werden die organischen Schadstoffe unter Überdruck mikrobiologisch umgesetzt und der entstehende biologische Schlamm durch eine Membran- oder Ultrafiltration vom Abwasser getrennt. Dieses Verfahren hat allerdings den Nachteil, daß biologisch schwer abbaubare organische Schadstoffe oder anorganische Schadstoffe, die von der Partikelgröße unterhalb der Membrantrenngrenze liegen nicht umgesetzt bzw. nicht abgetrennt werden, sondern im Abwasser verbleiben.

In der EP 0 503 115 wird aufbauend auf die DE 37 09 174 ein Verfahren beschrieben, bei dem nicht nur die organischen biologisch abbaubaren Schadstoffe sondern auch die biologisch schwer oder nicht abbaubaren organischen sowie die anorganischen Schadstoffe aus dem Abwasser entfernt werden. Dabei werden die biologisch schwer oder nicht abbaubaren organischen Stoffe physikalisch und/oder chemisch so behandelt, daß sie einer biologischen Behandlung zugeführt werden können. Weiterhin werden insbesondere die Schadstoffe aufkonzentriert und durchlaufen so mehrfach die biologische Reinigung. Diese Aufkonzentrierung wird durch Membranfiltration, vorzugsweise Nanofiltration durchgeführt, wobei die Nanofiltration den Vorteil hat, daß in dem so behandelten Abwasser nur niedermolekular gelöste Inhaltsstoffe, vor allem Salze, verbleiben. Allerdings weist auch dieses Verfahren den Nachteil auf, daß das behandelte Abwasser nicht weiter verwendet wird, sondern in die Kanalisation abgegeben wird.

Aus der DE 38 15 271 ist ein Verfahren bekannt bei dem vor oder nach der biologischen Reinigungsstufe mindestens eines der folgenden Verfahren durchgeführt wird: Adsorption, Membranfiltration und/oder Oxidation. Allerdings weist auch dieses Verfahren den Nachteil auf, daß das behandelte Abwasser nicht weiter verwendet wird, sondern in die Kanalisation abgegeben wird.

Ein Verfahren zur Mehrfachnutzung von Abwässern ist schließlich bekannt aus der DE 199 23 796. Hierbei werden zusätzlich Qualitätskriterien für die Wiederverwendung des Abwassers in der Produktion angegeben:

**Tabelle 2: Qualitätsmerkmale mit Zielwerten im aufbereiteten Abwasser.**

| | |
|---|---|
| **Parameter** | **Zielwerte** |
| CSB | < 100 mg |
| CaO | < 50 mg |
| Leitfähigkeit | < 1000 mS/cm |

Nach Durchlaufen einer geeigneten ABA wird das Abwasser zuerst durch einen Sandfilter geleitet. Danach durchläuft das Abwasser einen Festbettreaktor zum Abbau des CSB. Anschließend werden die Ca-Ionen in zwei abwechselnd arbeitenden Enthärtersäulen gegen Na-Ionen ausgetauscht. Die abschließende Nanofiltration dient dann zur Einstellung aller Qualitätsparameter des dann so gereinigten Abwassers. Nachteilig ist hier zu bewerten, daß bei diesem Verfahren eine relativ große Menge Abwasser anfällt sowie durch die Enthärteranlage noch ein zusätzlicher Abwasserstrom geschaffen wird.

Vor diesem Hintergrund war es die Aufgabe der vorliegenden Erfindung, ein Verfahren zu entwickeln, daß Industrieabwässer kontinuierlich so aufbereitet, daß es der Produktion wieder zur Verfügung steht und die Nachteile der vorher beschriebenen Verfahren vermeidet.

Diese Aufgabe wird durch ein Verfahren zur Aufbereitung von Industrieabwässern mit den Merkmalen des Anspruches 1 gelöst. Weitere vorteilhafte Ausgestaltungen sind in den Unteransprüchen enthalten.

Erfindungsgemäß wird das Abwasser aus der metallverarbeitenden Industrie, zunächst durch einen Flockungs- bzw. Fällungsprozeß zur Entfernung der Schwermetalle aus dem Abwasser vorbehandelt. Als Flockungshilfsmittel werden üblicherweise Metallsalze oder Kombinationsprodukte verwendet. Die Zugabe der Flockungshilfsmittel erfolgt im neutralen bis saueren Milieu. Die Neutralisation erfolgt dann mittels einer Lauge wobei bevorzugt Natronlauge, Kalkmilch o. Ä. verwendet wird. Die entstehenden Flocken werden mit einem geeigneten Abscheider z. B. einem Schrägklärer abgeschieden. Je nach Art des metallverarbeitenden Betriebes kann ein nachfolgender Ölabscheider oder Koaleszenzabscheider erforderlich sein, der dann das freie Öl aus dem Abwasserstrom entfernt. Über ein geeignetes Filtersystem, z. B. einen Sandfilter, zum Abscheiden von Restflocken und/oder Schwebstoffen gelangt das Abwasser dann zu einer biologischen Reinigungsstufe. Diese biologische Reinigungsstufe ist in der Regel als Tropfkörper oder Festbettreaktor ausgebildet. Dabei dient die biologische Reinigungsstufe zum Abbau des chemischen Sauerstoffbedarfs (CSB). Vorzugsweise wird die biologische Reinigungsstufe durch Einblasen von Sauerstoff unterstützt. Der biologischen Reinigungsstufe kann ein Feinfilter nachgeschaltet sein, der die Membran der Nanofiltration vor Kohleabrieb aus der biologischen Reinigungsstufe schützen soll. Zur Stabilisierung der Temperatur kann ein Wärmetauscher integriert sein, der je nach Bedarf die Temperatur erhöht oder erniedrigt. Letztendlich wird das Abwasser einer ein- oder mehrstufigen Nanofiltrationsanlage zugeführt. Filtersystem, biologische Reinigungsstufe und Nanofiltrationsanlage werden je nach Bedarf in bekannter Weise rückgespült.

In einer vorteilhaften Ausgestaltung der vorliegenden Erfindung durchläuft der nach der Nanofiltration verbleibende Teil des Abwasserstromes erneut die Nanofiltration. Das Verhältnis von Abwasserstrom, der die Nanofiltration erneut durchläuft, zu gereinigtem Wasser ist dabei je nach Bedarf auszulegen. Als vorteilhaft hat sich ein Verhältnis von 10 Teilen Abwasserstrom zu 1 Teil gereinigtem Wasser herausgestellt. Die Rückführung in die Nanofiltration weist dabei den Vorteil auf, daß die Nanofiltrationsmembran sehr fein gewählt werden kann, da der Abwasserstrom die Membran mehrfach passiert. Zusätzlich findet eine Aufkonzentration der Schadstoffe im Nanofiltrationskreislauf statt. Vorteilhaft ist es außerdem den Nanofiltrationskreislauf im Feed- and Bleedverfahren durchzuführen. Die Bleedpumpe sorgt dabei für einen gleichbleibenden Druck für die Nanofiltration während die Feedpumpe so eingestellt ist, daß sie die Menge des gereinigten Abwassers durch Zufuhr von Abwasser aus dem Biofilter ersetzt und so dafür sorgt, daß die Flüssigkeitsmenge für die Nanofiltration gleichbleibend ist. In die Zufuhr des Abwassers zur Nanofiltration können auch hier wieder wie zuvor ein Feinfilter und ein Wärmetauscher integriert sein. Auch bei dieser Anordnung werden die einzelnen Komponenten regelmäßig rückgespült.

In einer weiteren vorteilhaften Ausgestaltung der Erfindung wird der nach der Nanofiltration verbleibende nicht gereinigte Abwasserstrom wieder zurück zur erneuten Behandlung in die biologische Reinigungsstufe geführt. Dies hat den Vorteil, daß der CSB kontinuierlich abgebaut wird sowie Schwankungen im Schadstoffgehalt ausgeglichen werden. Weiterhin findet auch hier eine Aufkonzentration der Schadstoffe durch die Nanofiltration statt, die, wie oben bereits erwähnt, zum Teil in der biologischen Reinigungsstufe abgebaut werden. Das Abwasser wird auch in dieser Anordnung bevorzugt im Feed- und Bleedverfahren über einen Feinfilter und einen Wärmetauscher der Nanofiltration zugeführt. Alle Filter benötigen wie oben eine regelmäßige Rückspülung.

In einer weiteren bevorzugten Ausgestaltung der Erfindung wird der Abwasserstrom nach Passieren der Nanofiltration über ein Filtersystem zurück in die biologische Reinigungsstufe geführt und weiter wie oben bevorzugt über einen Feinfilter und einen Wärmetauscher zur Nanofiltration geleitet. Der Vorteil gegenüber der zuvor erwähnten Ausgestaltung liegt hierbei in der Möglichkeit zusätzlich Schwebstoffe auszuflocken, bevor der Abwasserstrom in den Biofilter geleitet wird. Auch hier werden die Filter in bekannter Weise zurückgespült.

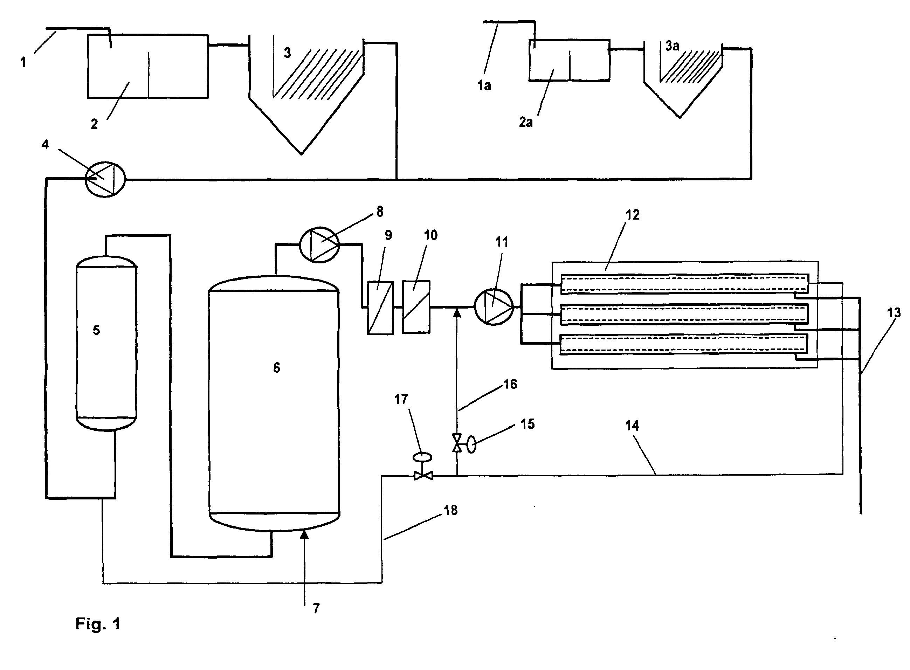

Die Erfindung wird anhand des in der beiliegenden Zeichnung gezeigten Ausführungsbeispieles näher erläutert. Es zeigt
- Fig. 1: eine schematischen Skizze einer bevorzugten Ausführung der erfindungsgemäßen Abwasserreinigungsanlage

In Figur 1 zeigt eine schematische Zeichnung der erfindungsgemäßen Abwasserreinigungsanlage. Das Abwasser aus der Produktion erreicht die erfindungsgemäße Abwasserreinigungsanlage durch eine oder mehrere Abwasserleitungen 1, 1a. Das Abwasser wird zunächst einem Flockungs- bzw. Fällungsprozeß 2, 2a zur Entfernung der Schwermetalle aus dem Abwasser unterzogen. Die entstehenden Flocken werden in einem geeigneten Abscheider 3, 3a, z. B. einem Schrägklärer (hier gezeigt) abgeschieden. Der so vorbehandelte Abwasserstrom gelangt dann über eine Pumpstation 4 zu einem Filtersystem 5. Das Filtersystem 5 dient dazu Restflocken der Flockung/Fällung 2, 2a zu entfernen. Im anschließenden Biofilter 6 wird der CSB abgebaut wobei der Biofilter 6 bevorzugt als Tropfkörper oder Festbettreaktor ausgeführt ist. Zur Unterstützung wird zusätzlich Sauerstoff 7 in den Biofilter 6 eingeblasen. Die Feedpumpe 8 fördert den so behandelten Abwasserstrom weiter über einen Feinfilter 9, zum Schutz der Membrane der Nanofiltration 12 vor Kohleabrieb, einen Wärmetauscher 10, zur Stabilisierung der Temperatur, zur Nanofiltrationsanlage 12. Hierbei sorgt die vorgeschaltete Bleedpumpe 11 für den nötigen gleichbleibenden Druck in der Nanofiltrationsanlage 12. Das gereinigte Abwasser 13, vorteilhafterweise ungefähr ein Zehntel des Gesamtabwasserstroms, verläßt die Nanofiltrationsanlage 12 und kann somit der Produktion wieder zugeführt werden. Das verbleibende Abwasser wird über eine Leitung 14 erfindungsgemäß wieder der oder den Reinigungsstufen 5, 6, 12 zugeführt. Dabei erfolgt bei dieser Ausführung die Rückführung entweder über das Ventil 15 und die Leitung 16 zurück zur Nanofiltration 12 oder über das Ventil 17 und die Leitung 18 zurück in den Filter 5.

## Patentansprüche

1. Verfahren zur Aufbereitung von Abwässern aus der metallverarbeitenden Industrie und damit zur Aufbereitung von mit Schwermetallen belasteten Abwässern, wobei das Abwasser (1, 1a)
- mindestens eine chemische/physikalische Flockung/Fällung (2, 2a),
- ein Filtersystem (5),
- eine biologische Abwasserreinigungsstufe (6),
- sowie eine Nanofiltrationseinheit (12) durchläuft
**dadurch gekennzeichnet, daß**
das Abwasser (1, 1a) im Rahmen einer Vorbehandlung die chemische/physikalische Flockung/Fällung (2, 2a) als erstes d. h. vor dem Filtersystem (5), vor der biologischen Abwasserreinigungsstufe (6) und vor der Nanofiltrationseinheit (12) durchläuft.

2. Verfahren nach Anspruch 1,
**dadurch gekennzeichnet, daß**
der Abwasserstrom (14) nach Passieren der Nanofiltration (12) wieder zurück zur erneuten Nanofiltration (12) geführt wird.

3. Verfahren nach Anspruch 1,
**dadurch gekennzeichnet, daß**
der Abwasserstrom (14) nach Passieren der Nanofiltration (12) wieder zurück zur erneuten Behandlung in die biologische Reinigungsstufe (6) geführt wird.

4. Verfahren nach Anspruch 1,
**dadurch gekennzeichnet, daß**
der Abwasserstrom (14) nach Passieren der Nanofiltration (12) über ein Filtersystem (5) zurück in die biologische Reinigungsstufe (6) geführt wird.

## Revendications

1. Procédé de traitement d'eaux résiduaires de l'industrie de traitement des métaux et de traitement d'eaux résiduaires chargées en métaux lourds, dans lequel les eaux résiduaires (1, 1a) passent par
- au moins une floculation/précipitation (2, 2a) physique/chimique,
- un système de filtration (5),
- une étape (6) de purification biologique des eaux résiduaires,
- et par une unité de nanofiltration (12),
**caractérisé en ce que** dans le cadre d'un prétraitement, les eaux résiduaires (1, 1a) passent en premier lieu par la floculation/précipitation (2, 2a) physique/chimique, c'est-à-dire avant de passer par le système de filtration (5), avant de passer par l'étape (6) de purification biologique des eaux résiduaires et avant de passer par l'unité de nanofiltration (12).

2. Procédé selon la revendication 1, **caractérisé en ce qu'**après son passage par la nanofiltration (12), l'écoulement (14) d'eaux résiduaires est renvoyé de nouveau dans la nanofiltration (12).

3. Procédé selon la revendication 1, **caractérisé en ce qu'**après son passage par la nanofiltration (12), l'écoulement (14) d'eaux résiduaires est renvoyé de nouveau dans le traitement (6) de purification biologique.

4. Procédé selon la revendication 1, **caractérisé en ce qu'**après son passage par la nanofiltration (12) l'écoulement d'eaux résiduaires (14) est renvoyé dans l'étape (6) de purification biologique au moyen d'un système de filtration (5).

## Claims

1. Process for treating and thus for treating wastewaters polluted with heavy metals, the wastewater (1, 1 a) passing through
- at least one chemical/physical flocculation/precipitation (2, 2a),
- a filter system (5),
- a biological wastewater purification stage (6),
- and also a nanofiltration unit (12),
wastewaters from the metal-processing industry **characterized in that**,
the wastewater (1, 1a), as part of a pretreatment, passes first through the chemical/physical flocculation/precipitation (2, 2a), i.e. before the filter system(s), before the biological wastewater purification stage (6) and before the nanofiltration unit (12).

2. Process according to Claim 1,
**characterized in that**
the wastewater stream (14), after passing through the nanofiltration (12) is fed back for renewed nanofiltration (12).

3. Process according to Claim 1,
**characterized in that**
the wastewater stream (14), after passing through the nanofiltration (12), is fed back to the biological purification stage (6) for renewed treatment.

4. Process according to Claim 1,
**characterized in that**
the wastewater stream (14), after passing through the nanofiltration (12), is fed back into the biological purification stage (5) via a filter system (6).
